# EUROPÄISCHE PATENTANMELDUNG

(11) **EP 2 287 254 A1**
(43) Veröffentlichungstag der Anmeldung: **23.02.2011**
(21) Anmeldenummer: 10165613.0
(22) Anmeldetag: 11.06.2010
(51) Int. Cl.: C08L 75/04, B27N 3/00, C08L 61/06, C08L 61/24, C08L 61/28, B27N 3/08, C09J 175/04, C09J 11/08, C09J 161/06, C09J 161/24, C09J 161/28

(54) **Kompositformkörper enthaltend oberflächenaktives Additiv**

(30) Priorität: 10.07.2009 US 224544 P
(71) Anmelder: Evonik Goldschmidt GmbH, 45127 Essen (DE)
(72) Erfinder: Lüthge, Thomas, 19086, Consrade (DE); Peters, Maike, 20535, Hamburg (DE); Magee, Michael, Midlothian, VA 23112 (US); Burkhart, Georg, 45239, Essen (DE)

(57) **Zusammenfassung**

Zusammensetzungen enthaltend zumindest ein Bindemittel und zumindest ein oberflächenaktives Additiv in Verfahren zur Herstellung von Kompositformkörpern sowie deren Verwendung.

## Beschreibung

Die Erfindung betrifft Kompositformkörper enthaltend cellulosehaltige, glas-, mineralstoff-, polymer- und/oder metallhaltige Materialien, Bindemittel und mindestens ein Additiv der angegebenen Struktur I und das Verfahren zur Herstellung dieser.

Die Herstellung dieser Formkörper erfolgt bevorzugt durch Heißverpressen von mit Bindemitteln beleimten Materialien, wobei die Benetzung der Materialien durch das Bindemittel durch Additive verbessert wurde.

Die Herstellung zumeist komprimierter, geformt als Composites oder Komposites bezeichneter Formkörper, wie etwa OSB (oriented strand board) -Platten, Spanplatten, Faserplatten, Sperrholz- oder auch Korkplatten und Flockenverbundschaumstoffen mit Bindemitteln in einem offenen oder geschlossenen Formwerkzeug ist aus zahlreichen Literatur- und Patentveröffentlichungen WO 98/00464, US 5,008,359, US 5,140,086, US 5,204,176, US 3,440,189 bekannt. Die Formkörper können aus verschiedenartigen cellulosehaltigen Materialien, etwa Spänen, Fasern oder Granulaten, aber auch Stroh oder Flachs, bestehen. Bei der Herstellung können gegebenenfalls auch Katalysatoren, Hilfsmittel und/oder weitere Zusatzstoffe mit verwendet werden.

Bei den Herstellungsprozessen sind Temperaturen von 0 bis 400°C nötig, um die Reaktion der Bindemittel mit dem cellulosehaltigen Material zu gewährleisten und die Formung der Materialien zu der gewünschten Endform, wie beispielsweise Platten, zu ermöglichen. Dabei werden Drücke von 0 - 100 bar erreicht bzw. angewandt.

Der Massenanteil der Bindemittel am Gesamtgewicht der Formkörper, beträgt abhängig von der Art des verwendeten Bindemittels und der Kompositart zwischen 1 - 50 Gew.-%, vorzugsweise 5 bis 35 Gew.-% und insbesondere weniger als 20 Gew.-%.

Verwendete Bindemittel sind alle Arten polyfunktionalisierter Isocyanate, typischerweise aromatische Polyisocyanate. Das am weitesten verbreitete aromatische Polyisocyanat ist polymeres Diphenylmethandiisocyanat (PMDI). Neben den Isocyanaten werden verschiedene Formaldehyd-Harze als Bindemittel für Kompositformkörper verwendet. Zu den gängigsten gehören Harnstoff/Formaldehyd-, Phenol/Formaldehyd- oder Melamin/ Formaldehyd-Harze und Mischungen aus diesen. In geringen Mengen werden auch Bindemittel aus nachwachsenden Rohstoffen wie Tanninen, Ligninen oder Proteinen verwendet.

Ein wichtiger Faktor bei der Herstellung von Kompositformkörpern, wie beispielsweise Platten aus cellulosehaltigen Materialien und Bindemittel, sind die Grenzflächenaspekte zwischen den einzelnen Partikeln oder Fasern und dem Bindemittel. Dabei spielen zwei Eigenschaften des Bindemittels eine wichtige Rolle: zum einen die Eindringtiefe des Bindemittels in das Material, wichtiger jedoch ist die Benetzung der Materialoberfläche, beispielsweise der Holzoberfläche mit dem Bindemittel. Durch die Zugabe geringer Mengen von Additiven in Form von oberflächenaktiven Substanzen wird die Oberflächenspannung des Bindemittels herabgesetzt, welches zu einer besseren Spreitung des Bindemittels auf der Oberfläche des Materials führt. Gleichzeitig wird das Quellverhalten der gepressten Formkörper positiv beeinflusst (weniger ausgeprägte Quellung).

Aufgabe der Erfindung ist es daher, neue Kompositformkörper unter Verwendung von Zusammensetzungen bereitzustellen, die die erforderlichen Bindemittel so modifizieren, dass es zu einer besseren Verteilung des Bindemittels auf der Oberfläche kommt, was zu einer verbesserten Haftung und minimiertem Quellverhalten des Kompositformkörpers führt.

Ein Gegenstand der Erfindung sind daher Kompositformkörper, die unter Verwendung von Zusammensetzungen hergestellt wurden, die zumindest ein Bindemittel und mindestens ein oberflächenaktives Additiv enthalten.

Das oberflächenaktive Additiv kann dabei eine organische, bevorzugt eine metallorganische und/oder eine siliciumorganische Verbindung sein und insbesondere ein Siloxan der Formel (I).

Der Kompositformkörper besteht aus cellulose-, glas-, mineralstoff-, polymer- und/oder metallhaltigen Materialien.

Ein weiterer Gegenstand der Erfindung ist auch die Zusammensetzung selbst, enthaltend einen organischen Binder und zumindest eine oberflächenaktive Substanz. Bevorzugt ist die oberflächenaktive Substanz in den Zusammensetzungen ein Siloxan der Formel (I).

Ein weiterer Gegenstand der Erfindung sind daher Zusammensetzungen, die sich dadurch auszeichnen, dass sie oberflächenaktive Verbindungen der Formel (I) enthalten 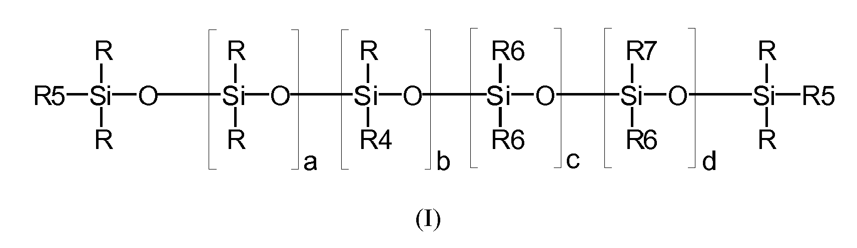 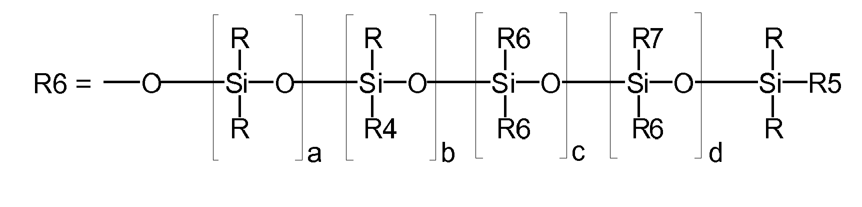 worin
- a: unabhängig voneinander 0 bis 500 ist,
- b: unabhängig voneinander 0 bis 60 ist,
- c: unabhängig voneinander 0 bis 10, vorzugsweise 0 oder > 0 bis 5 und insbesondere 1, 2 oder 3 ist,
- d: unabhängig voneinander 0 bis 10, vorzugsweise 0 oder > 0 bis 5 und insbesondere 1, 2 oder 3 ist,
mit der Maßgabe, dass pro Molekül der Formel (I) die mittlere Anzahl Σd der T-Einheiten und die mittlere Anzahl Σc der Q-Einheiten pro Molekül jeweils nicht größer als 50, die mittlere Anzahl Σa der D-Einheiten pro Molekül nicht größer als 2000 und die mittlere Anzahl Σb der R4 tragenden Siloxy-Einheiten pro Molekül nicht größer als 100 ist,
R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen, vorzugsweise jedoch ein Methylrest ist,
R5 unabhängig voneinander R4 oder R ist,
R4 unabhängig voneinander ein organischer Rest ungleich R, oder ein Fragment ausgewählt aus der Gruppe

-CH₂-CH₂-CH₂-O-(CH₂-CH₂O-)ₓ-(CH₂-CH(R¹)O-)_{y}-R²

-CH₂-CH₂-O-(CH₂-CH₂O-)ₓ-(CH₂-CH(R¹)O-)_{y}-R²

-CH₂-R³

-CH₂-CH₂-(O)_{x'}-R³

-CH₂-CH₂-CH₂-O-CH₂-CH(OH)-CH₂OH

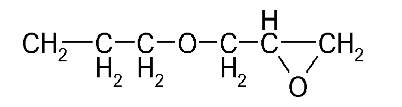

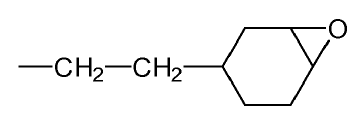

oder

-CH₂-CH₂-CH₂-O-CH₂-C(CH₂OH)₂-CH₂-CH₃

ist, worin
x 0 bis 100, vorzugsweise > 0, insbesondere 1 bis 50,
x' 0 oder 1,
y 0 bis 100, vorzugsweise > 0, insbesondere 1 bis 50,
R¹ unabhängig voneinander eine substituierte oder unsubstituierte Alkyl- oder Arylgruppe mit 1 bis 12 C-Atomen ist, beispielsweise ein substituierter Alkylrest, Arylrest oder Halogenalkyl- oder Halogenarylrest, und, wobei innerhalb eines Restes R4 und/oder eines Moleküls der Formel I untereinander verschiedene Substituenten R¹ vorliegen können, und
R² unabhängig voneinander ein Wasserstoffrest oder eine Alkylgruppe mit 1 bis 4 C-Atomen, eine Gruppe -C(O)-R' mit R' = Alkylrest, eine Gruppe -CH₂-O-R¹, eine Alkylarylgruppe, wie z.B. eine Benzylgruppe, oder die Gruppe -C(0)NH-R' bedeutet,
R³ ein linearer, cyclischer oder verzweigter oder substituierter, z. B. mit Halogenen substituierter, Kohlenwasserstoffrest mit 1 bis 50, vorzugsweise 9 bis 45, bevorzugt 13 bis 37 C-Atomen ist,
R7 unabhängig voneinander R, R4 und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste sein kann.

Die verschiedenen Monomereinheiten der in den Formeln angegebenen Bausteine (Siloxanketten bzw. Polyoxyalkylenkette) können untereinander blockweise aufgebaut sein mit einer beliebigen Anzahl an Blöcken und einer beliebigen Sequenz oder einer statistischen Verteilung unterliegen. Die in den Formeln verwendeten Indices sind als statistische Mittelwerte zu betrachten.

Vorteilhaft werden 0,01 bis 70 Gew.-%, bevorzugt 0,01 bis 50 Gew.-% und ganz besonders bevorzugt 0,01 bis 10 Gew.-% mindestens eines erfindungsgemäßen oberflächenaktiven Additivs, Gew.-% bezogen auf die Menge des Bindemittels, bei der Herstellung des Kompositformkörpers verwendet.

Der Kompositformkörper wird hergestellt unter Verwendung von bevorzugt 99 - 0,1 Gew.-%, insbesondere 99 bis 1 Gew.-% eines cellulosehaltigen Werkstoffs, bezogen auf die Gesamtformulierung.

Als Bindemittel können Polyisocyanate, Harnstoff/Formaldehyd-, Phenol/Formaldeyd- und/oder Melamin/Formaldehyd-Harze allein oder in Mischungen miteinander verwendet werden. Der Bindemittelanteil im Kompositformkörper beträgt 1 bis 50 Gew.-%, vorzugsweise 5 bis 35 Gew.-% und insbesondere weniger als 20 Gew.-% bezogen auf die Gesamtfomulierung des Kompositformkörpers.

Die erfindungsgemäßen Kompositformkörper können weitere Stoffe enthalten. Insbesondere können die erfindungsgemäßen Zusammensetzungen weitere organische Additive, Tenside und/oder Emulgatoren und/oder Lösungsmittel enthalten.

Es kann außerdem vorteilhaft sein, wenn die erfindungsgemäße Zusammensetzung ein Lösungsmittel, insbesondere ein organisches Lösungsmittel, bevorzugt ein gegenüber Isocyanaten nicht reaktives Lösungsmittel enthält.

Ein weiterer Gegenstand der Erfindung ist ein Verfahren zur Herstellung der Kompositformkörper durch Verpressen beleimter Materialien, insbesondere cellulosehaltiger Materialien. Das Verfahren zeichnet sich insbesondere dadurch aus, dass die Presstemperatur bei einer Heissverpressung 0 bis 400 °C, bevorzugt 100 bis 300 °C und ganz besonders bevorzugt 150 bis 250°C beträgt.

Vorteilhaft wird bei dem Verfahren das oberflächenaktive Additiv in das Bindemittel eingebracht und die Mischung im Anschluss nach den üblichen, dem Fachmann geläufigen Verfahren aufgebracht, beispielsweise direkt auf das Material oder den Werkstoff aufgetragen.

Der beim Pressvorgang erreichte Druck liegt bei 0 bis 100 bar, bevorzugt bei 20 - 80 bar. Die Herstellung der Kompositformkörper erfolgt auf kontinuierlichen (Rollenpressung) als auch auf diskontinuierlichen (Plattenpressung) Anlagen.

Verwendung finden die Formkörper in Form von Platten, Blöcken, Strängen und Balken. Diese werden zur Herstellung von Gegenständen jeglicher Art, insbesondere zur Herstellung von Möbeln und Möbelteilen, sowie im Haus- und Innenausbau verwendet.

Ein weiterer Gegenstand der Erfindung sind Kompositformkörper in Form von Spanplatten, OSB-Platten, Faserplatten, Sperrholz- und/oder Korkplatten, hergestellt nach einem der genannten Verfahren unter Verwendung der erfindungsgemäßen Zusammensetzungen.

Weitere Ausgestaltungen der Erfindung ergeben sich aus den Ansprüchen, deren Offenbarungsgehalt vollumfänglich Teil dieser Beschreibung ist.

Die erfindungsgemäßen Kompositformkörper, Verfahren zu deren Herstellung, Bindemittel-Zusammensetzungen und deren Verwendung werden nachfolgend beispielhaft beschrieben, ohne dass die Erfindung auf diese beispielhaften Ausführungsformen beschränkt sein soll.

Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können.

### Beispiele

Die Struktur der in den Anwendungsbeispielen eingesetzten Verbindungen kann Tabelle 1 entnommen werden. Die in Tabelle 1 aufgeführten Parameter beziehen sich auf die oben genannte Formel (I).

**Tabelle 1: Zusammensetzungen der Beispiele 1 bis 5, enthaltend Verbindungen der Formel (I)**

| Bsp. | Σa | Σb | Σc | Σd | R | R4 * | | | | R5 | R7 |
|---|---|---|---|---|---|---|---|---|---|---|---|
| | | | | | | x | y | R1 | R2 | | |
| 1 | 20 | 5 | 0 | 0 | CH₃ | 15 | 4 | CH₃ | CH₃ | CH₃ | - |
| 2 | 35 | 3 | 0 | 0 | CH₃ | 13 | - | - | 50% CH₃ 50% H | R4 | - |
| 3 | 30 | 2 | 0 | 1 | CH₃ | 15 | 8 | CH₃ | H | CH₃ | CH₃ |
| 4 | 40 | 3 | 1 | 0 | CH₃ | 15 | 8 | CH₃ | H | CH₃ | - |
| 5 | 0 | 1 | 0 | 0 | CH₃ | 10 | - | - | CH₃ | CH₃ | - |

| | | | | | | | | | | | |
|---|---|---|---|---|---|---|---|---|---|---|---|
| * R4 = -CH₂-CH₂-CH₂-O-(CH₂-CH₂O-)ₓ-(C-H₂-C-H(R¹)O-)_{y}-R² | | | | | | | | | | | |

Die Additive können als Reinstoffe, aber auch als Gemische eingesetzt werden.

Diese Additive werden direkt in das Bindemittel eingerührt und zusammen mit diesen auf die Formteilchen aufgetragen.

Klassischerweise wird das Kompositbasismaterial, beispielsweise das cellulosehaltige Material in Faser- oder Partikelform vorgelegt, mit dem Bindemittel versetzt und anschließend in einer Metallpresse geformt.

0,2 Gew.-% der oberflächenaktiven Substanz wurden in das entsprechende Bindemittel eingerührt und anschließend eine Menge von 40 µl auf Holz (Fichte) und einer Metallplatte aufgetragen. Nach 10 min wurde die Ausbreitung des Tropfens bestimmt. Zusätzlich wurde die Oberflächenspannung mit Hilfe eines Kruss Tensiometers gemessen.

Zur Untersuchung der Dickenquellung wurden Presslinge mit einem Durchmesser von 8,5 cm aus mit den unten angegebenen Mischungen beleimten Spänen hergestellt. Anschließend wurden die Presslinge 24 h in Wasser gelegt und die Dicken vor und nach dem Wässern bestimmt.

Bei den Presslingen der Mischungen 1 bis 4 wurden 4 Gew.-% Bindemittel bezogen auf die Gesamtformulierung eingesetzt; bezogen auf den Bindemittelanteil werden jeweils 0,2 Gew.-% des oberflächenaktiven Additivs verwendet. Die Leimmischung PMDI wurde ohne Zusatz des Additivs bereitet.

In den Vergleichsbeispielen VM1 wurden 4 Gew.-% reines PMDI als Binder bezogen auf die Gesamtformulierung sowie im Vergleichsbeispiel VM2, ein Urethan-Formaldehydharz-Bindesystem - UF-Harz - eingesetzt. Bei dem UF-Harz betrug der Bindemittelanteil 10 Gew.-% bezogen auf die Gesamtformulierung. Die Ergebnisse der Dickenquellung sind in der Tabelle 2 in Form der prozentualen Zunahmen verzeichnet.

Erfindungsgemäße Beispiele (Mischung 1-5):
Mischung 1 (PMDI): Bayer Desmodur^{®} 1520 A20 + 0,2 Gew.-% Beispiel 1
Mischung 2 (PMDI): Bayer Desmodur^{®} 1520 A20 + 0,2 Gew.-% Beispiel 2
Mischung 3 (PMDI): Bayer Desmodur^{®} 1520 A20 + 0,2 Gew.-% Beispiel 3
Mischung 4 (PMDI): Bayer Desmodur^{®} 1520 A20 + 0,2 Gew.-% Beispiel 4
Mischung 5 (UF): BASF Kaurit^{®} Leim 350 + 0,2 Gew.-% Beispiel 5
UF ist ein Urethan-Formaldehydharz; 10 Gew.-% Bindermenge bezogen auf Gesamtformulierung.
VM 1 PMDI ohne erfindungsgemäßes Additiv, 4 Gew.-% Bindemittel
VM 2 UF-Harz ohne erfindungsgemäßes Additiv, 10 Gew.-% Bindemittel

Der prozentuale Anteil des Additivs ist bezogen auf den Bindemittelanteil.

**Tabelle 2: Benetzung und Dickenquellung**

| Leimmischung | Oberflächenspannung | Benetzte Fläche | Dickenquellung nach 24h** |
|---|---|---|---|
| VM1 PMDI* | 45,0 mN/m | 286 mm² | 35% |
| Mischung 1 | 24,5 mN/m | 614 mm² | 27% |
| Mischung 2 | 22,1 mN/m | 774 mm² | 25% |
| Mischung 3 | 27,1 mN/m | 495 mm² | 24% |
| Mischung 4 | 26,3 mN/m | 531 mm² | 24% |
| VM2 UF-Harz* | 76 mN/m | 124 mm² | 43% |
| Mischung 5 | 23 mN/m | 248 mm² | 35% |

| | | | |
|---|---|---|---|
| * Vergleichsversuch ohne Zusatz einer oberflächenaktiven Substanz **prozentuale Zunahme bezogen das Längenmaß | | | |

Die Vergleichsbeispiele VM1, das reine PDMI ohne einen Zusatz des erfindungsgemäßen Additivs und das Vergleichsbeispiel VM2, das Urethan-Formaldedydharz ohne weiteren Zusatz eines Additivs zeigen vergleichsweise niedrige Werte für die benetzte Fläche, während die erfindungsgemäßen Beispiele der Mischungen 1 bis 5 wesentlich erhöhte benetzte Flächen zeigen und auch wesentlich verringerte Oberflächenspannungen aufweisen.

Überraschenderweise steigt die benetzte Fläche zumindest um wesentlich mehr als 50 % an bei nur 0,2 gew.-%igem Zusatz des erfindungsgemäßen Additivs (bezogen auf die Bindermenge), bei Mischung 1 um 115 %, bei Mischung 2 um 171 %, bei Mischung 3 um 73 %, bei Mischung 4 um 186 % und bei Mischung 5 gegenüber dem UF-Harz um 100 %.

Ebenfalls bemerkenswert ist, dass die Dickenquellung nach Wässern deutlich verringert wird, wenn dem Bindemittel ein erfindungsgemäßes Additiv zugesetzt wird.

Die Vergleichsversuche zu der Anwendung ohne oberflächenaktive Substanz belegen zudem, dass zur Erzielung der gleichen Eigenschaften des Kompositkörpers zumindest 15 Gew.-%, bevorzugt 25 Gew.-% an Bindemittel eingespart werden können, was zu einem Kostenvorteil führt.

## Patentansprüche

1. Kompositformkörper hergestellt unter Verwendung einer Zusammensetzung enthaltend zumindest ein Bindemittel und mindestens ein oberflächenaktives Additiv.

2. Kompositformkörper nach Anspruch 1, **dadurch gekennzeichnet, dass** das oberflächenaktive Additiv eine organische, bevorzugt eine metallorganische und/oder eine siliciumorganische Verbindung ist.

3. Kompositformkörper nach Anspruch 2, **dadurch gekennzeichnet, dass** er aus cellulose-, glas-, mineralstoff-, polymer- und/oder metallhaltigen Materialien besteht.

4. Kompositformkörper nach zumindest einem der Ansprüche 2 bis 3, **dadurch gekennzeichnet, dass** das oberflächenaktive Additiv eine Verbindung der allgemeinen Formel (I) ist 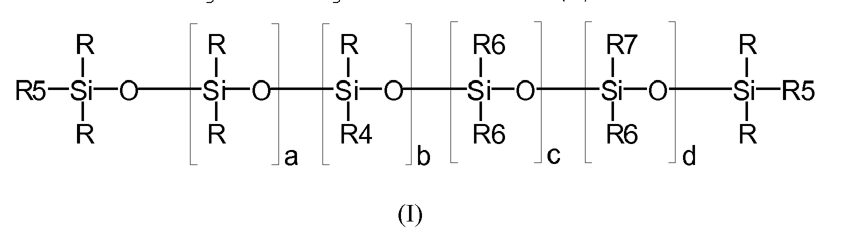 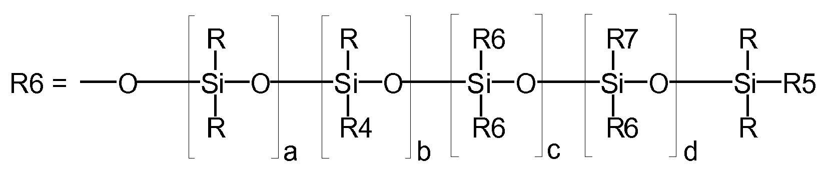 wobei
a unabhängig voneinander 0 bis 500 ist,
b unabhängig voneinander 0 bis 60 ist,
c unabhängig voneinander 0 bis 10 ist,
d unabhängig voneinander 0 bis 10 ist,
mit der Maßgabe, dass pro Molekül der Formel (I) die mittlere Anzahl Σd der T-Einheiten und die mittlere Anzahl Σc der Q-Einheiten pro Molekül jeweils nicht größer als 50, die mittlere Anzahl Σa der D-Einheiten pro Molekül nicht größer als 2000 und die mittlere Anzahl Σb der R4 tragenden Siloxy-Einheiten pro Molekül nicht größer als 100 ist,
R unabhängig voneinander mindestens ein Rest aus der Gruppe linearer, cyclischer oder verzweigter, aliphatischer oder aromatischer, gesättigter oder ungesättigter Kohlenwasserstoffreste mit 1 bis zu 20 C-Atomen ist,
R5 unabhängig voneinander R4 oder R ist,
R4 unabhängig voneinander ein organischer Rest ungleich R, oder ein Fragment ausgewählt aus der Gruppe
-C^{H}₂-CH₂-CH₂-O-(CH₂-CH₂O-)ₓ-(CH₂-CH(R¹)O-)_{y}-R²
-CH₂-CH₂-O-(CH₂-CH₂O-)ₓ-(CH₂-CH(R¹)O-)_{y}-R²
-CH₂-R³
-CH₂-CH₂-(O)ₓ'-R³
-CH₂-CH₂-CH₂-O-CH₂-CH(OH)-CH₂OH 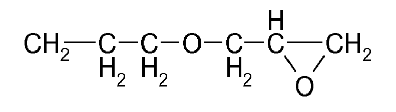 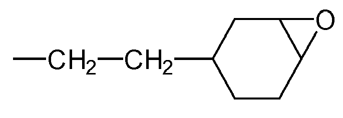
oder
-CH₂-CH₂-CH₂-O-CH₂-C(CH₂OH)₂-CH₂-CH₃
ist, worin
x 0 bis 100,
x' 0 oder 1,
y 0 bis 100,
R¹ unabhängig voneinander eine substituierte oder unsubstituierte Alkyl- oder Arylgruppe mit 1 bis 12 C-Atomen ist, wobei innerhalb eines Restes R4 und/oder eines Moleküls der Formel I untereinander verschiedene Substituenten R¹ vorliegen können, und
R² unabhängig voneinander ein Wasserstoffrest oder eine Alkylgruppe mit 1 bis 4 C-Atomen, eine Gruppe -C(O)-R' mit R' = Alkylrest, eine Gruppe -CH₂-O-R¹, eine Alkylarylgruppe, oder die Gruppe -C(O)NH-R¹ bedeutet,
R³ ein linearer, cyclischer oder verzweigter oder substituierter Kohlenwasserstoffrest mit 1 bis 50 C-Atomen ist,
R7 unabhängig voneinander R, R4 und/oder ein mit Heteroatomen substituierter, funktionalisierter, organischer, gesättigter oder ungesättigter Rest ausgewählt aus der Gruppe der Alkyl-, Aryl-, Chloralkyl-, Chloraryl-, Fluoralkyl-, Cyanoalkyl-, Acryloxyaryl-, Acryloxyalkyl-, Methacryloxyalkyl-, Methacryloxypropyl- oder Vinyl-Reste sein kann.

5. Kompositformkörper nach zumindest einem der vorstehenden Ansprüche hergestellt unter Verwendung von 99 bis 0,1 Gew.-% zumindest eines cellulosehaltigen Werkstoffs.

6. Kompositformkörper nach zumindest einem der vorstehenden Ansprüche, hergestellt unter Verwendung von 1 bis 50 Gew.-% zumindest eines Bindemittels.

7. Kompositformkörper nach zumindest einem der vorstehenden Ansprüche, hergestellt unter Verwendung von 70 bis 0,01 Gew.-% zumindest eines oberflächenaktiven Additivs bezogen auf die Bindemittelmenge.

8. Kompositformkörper nach zumindest einem der vorstehenden Ansprüche, hergestellt unter Verwendung von weiteren Additiven, Tensiden, Lösungsmitteln und/oder Emulgatoren.

9. Verfahren zur Herstellung eines Kompositformkörpers nach zumindest einem der vorhergehenden Ansprüche durch kontinuierliches oder diskontinuierliches Verpressen beleimter Materialien.

10. Verfahren nach Anspruch 9, **dadurch gekennzeichnet, dass** die Presstemperatur 0 - 400 °C bei einem Druck von 0 bis 100 bar beträgt.

11. Verfahren gemäß zumindest einem der Ansprüche 9 bis 10,
**dadurch gekennzeichnet, dass** als Bindemittel Polyisocyanate, Harnstoff/Formaldehyd-, Phenol/Formaldeyd- und/oder Melamin/Formaldehyd-Harze allein oder in Mischungen miteinander verwendet werden.

12. Verfahren gemäß zumindest einem der Ansprüche 9 bis 11,
**dadurch gekennzeichnet, dass** das oberflächenaktive Additiv in das Bindemittel eingebracht und die Mischung im Anschluss auf den Werkstoff aufgetragen wird.

13. Verwendung des Kompositformkörpers nach einem der Ansprüche 1 bis 8, zur Herstellung von Gegenständen aller Art, insbesondere in Form von Platten, Blöcken, Balken oder Strängen.

14. Verwendung des Kompositformkörpers gemäß Anspruch 13 zur Herstellung von Möbeln und Möbelteilen, von Verpackungsmaterialien, im Hausbau und Innenausbau.

15. Zusammensetzung enthaltend einen organischen Binder und zumindest eine oberflächenaktive Substanz zur Verwendung in einem der Verfahren nach zumindest einem der Ansprüche 9 bis 12.

16. Zusammensetzung nach Anspruch 15, **dadurch gekennzeichnet, dass** die oberflächenaktive Substanz ein Siloxan der Formel (I) ist.

17. Kompositformkörper in Form einer Spanplatte, OSB-Platte, Faserplatte, Sperrholz- und/oder Korkplatte hergestellt nach einem Verfahren gemäß zumindest einem der Ansprüche 9 bis 12.
